# EUROPÄISCHE PATENTSCHRIFT

(11) **EP 1 211 231 B1**
(45) Veröffentlichungstag und Bekanntmachung des Hinweises auf die Patenterteilung: **25.06.2008**
(21) Anmeldenummer: 01126747.3
(22) Anmeldetag: 09.11.2001
(51) Int. Cl.: C04B 35/573, C04B 35/80, C04B 37/00, F16D 69/02

(54) **Verfahren zum Herstellen eines Reibkörpers aus siliziuminfiltriertem,Kohlenstofffaser verstärktem porösen Kohlenstoff und Verwendung eines solchen Reibkörpers**
Method of making a friction body of silicon infiltrated carbon fiber reinforced porous carbon and use of such a friction body
Procédé de fabrication d'un corps de friction en carbone poreux infiltré par du silicium et renforcé par des fibres de carbone et utilisation d'un tel corps de friction

(30) Priorität: 01.12.2000 DE 10060566
(43) Veröffentlichungstag der Anmeldung: 05.06.2002
(73) Patentinhaber: Dr. Ing. h.c. F. Porsche Aktiengesellschaft, 71287 Weissach (DE)
(72) Erfinder: Martin, Roland, 73432 Aalen (DE)

(56) Entgegenhaltungen:
- WO-A-99/41069
- DE-A- 4 438 456
- DE-A- 19 901 215

## Beschreibung

Die Erfindung betrifft ein Verfahren zum Herstellen eines Reibkörpers aus siliziuminfiltriertem, Kohlenstofffaser verstärktem porösen Kohlenstoff und eine Verwendung eines solchen Reibkörpers nach dem Oberbegriff der unabhängigen Patentansprüche.

Reibkörper aus Kohlestofffaser-verstärktem Siliziumcarbid sind beispielsweise aus der DE 44 38 455 C1 bekannt.

Aus der EP 0 797 555 A1 (korrespondierend: DE 44 38 456) ist bereits eine Reibeinheit bekannt, die aus einem Kernkörper und wenigstens einem Reibkörper besteht. Dabei soll der Reibkörper zunächst als Kohlenstoffkörper hergestellt werden, der dann mit Silizium infiltriert wird. Zwischen dem Reibkörper und dem Kernkörper ist eine Verbindungsschicht vorgesehen, die im Wesentlichen Siliziumkarbid enthält. Es wird beschrieben, dass der Reibkörper und der Kernkörper separat gefertigt und dann miteinander verbunden werden sollen. Der Kernkörper kann, beispielsweise im Falle einer innenbelüfteten Bremsscheibe, auch zweiteilig ausgebildet sein, wobei die Kühlkanäle in der Verbindungsebene gebildet sind. Zum Verbinden von Reibkörper und Kernkörper werden zwei Wege vorgeschlagen: Entweder werden Reibkörper und Kernkörper aus Kohlenstoffmaterial hergestellt, zusammengesetzt und gemeinsam siliziert. Oder Reibkörper und Kernkörper werden separat siliziert und anschließend miteinander verbunden, indem in die Trennebene zwischen Reibkörper und Kernkörper Silizium oder vorzugsweise Siliziumkarbid eingebracht wird. Hinsichtlich der Zusammensetzung der Reibschicht ist offenbart, dass diese hinsichtlich ihres Reibverhaltens optimiert sein soll. Dazu wird vorgeschlagen, reibwerterhöhende oder reibwertmindernde Zusätze zu verwenden. Reibwertmindernd wirken Bornitrit oder Aluminiumphosphat, reibwerterhöhend hingegen Siliziumkarbid-Pulver mit einer Körnung von 0,3 bis 3,0 µm. Zusätzlich können Kohlenstoff-Fasern zur Erhöhung der Wärmeleitfähigkeit vorgesehen sein. Ein Faseranteil von 3 bis 10 % sollte dabei in Dickenrichtung verlaufen. Eine Optimierung der Reibschicht hinsichtlich ihrer Festigkeit ist nicht offenbart.

Die WO 99/41069 offenbart einen Faserverbundwerkstoff, beispielsweise zur Herstellung einer Bremsscheibe, als Gradientenwerkstoff in der Weise herzustellen, dass eine Pressform nacheinander mit Pressmassen unterschiedlicher Qualität gefüllt wird, die anschließend gemeinsam verpresst werden. Die offenbarten Pressmassen sind Kurzfaser-verstärkt, wobei es sich jedoch um keine Auswahlregel hinsichtlich der Länge der Fasern erkennen lässt. Wesentlich ist aber, dass die in der Reibschicht liegenden Fasern in geringerem Maße durch Imprägnieren geschützt sind, als die weiteren in der Tragschicht liegenden Fasern. Wird ein derartiger Verbundwerkstoff siliziert, so werden die nicht oder weniger stark imprägnierten Kohlstofffasern vom flüssigen Silizium angegriffen und zu Keramik umgewandelt. Bei den stark imprägnierten Fasern hingegen wird lediglich eine aus der Imprägnierung herrührende Außenschicht vom Silizium angegriffen und zu Keramik umgewandelt, während die eigentliche Kohlenstofffaser unbeeinflusst bleibt. Auf diese Weise wird die Duktilität und die Schadenstoleranz der Tragschicht verbessert.

Gegenüber diesem Stand der Technik stellt sich das Problem, ein alternatives Herstellverfahren bereitzustellen.

Dieses Problem wird erfindungsgemäß mit den Merkmalen der unabhängigen Patentansprüche gelöst. Vorzugsweise wird vorgeschlagen, in der Reibschicht Kohlenstofffasern vorzusehen, die kürzer als die Kohlenstofffasern des Kernkörpers sind. Dem liegt dabei die Erkenntnis zu Grunde, dass Faserlängen, wie sie im Bereich des Kernkörpers aus Festigkeitsgründen notwendig sind, in der Reibschicht zu großen Ausbrüchen führen. Ursache hierfür ist, dass ein aus der Oberfläche der Reibschicht ausbrechende Partikel über die eingebundenen Kohlenstofffasern umliegende Bereiche mitzureißen versucht. Besteht die Reibschicht hingegen aus reiner Keramik, sind also keine Kohlenstofffasern in der Reibschicht vorgesehen, treten ebenfalls großflächig Ausbrüche auf, da hier die notwendige Festigkeit der Reibschicht fehlt. Mit den vorgesehenen kürzeren Kohlenstofffasern hingegen wird in vorteilhafter Weise einerseits eine hohe Festigkeit der Reibschicht erzielt, wobei gleichzeitig Ausbrüche auf kleine Bereiche beschränkt sind, da aufgrund der verminderten Länger der Kohlenstofffasern ein ausbrechender Bereich der Reibfläche nur einen kleinen Umgebungsbereich mit sich reißen kann.

Gemäß einer vorteilhaften Weiterbildung der Vorrichtung beträgt die Länger der Kohlenstofffasern in der Reibschicht weniger als 50% der Länge der Kohlenstofffasern im Kernkörper. Ebenfalls als vorteilhaft hat sich eine Länge der Kohlenstofffasern in der Reibschicht in einem Bereich von 1mm bis 5 mm erwiesen.

Zur Herstellung eines Reibkörpers mit kurzen Fasern in der Reibschicht wird vorgeschlagen, die Reibschicht beim Urformen des Kernkörpers einzubringen, indem ein Grünling für die Reibschicht in die Urform für den Kernkörper eingelegt und nachfolgend das Material für den Kernkörper in die Urform eingefüllt wird. Die weitere Herstellung des Reibkörpers erfolgt dann in an sich bekannter Weise. Der besondere Vorteil liegt darin, dass keine zusätzliche Bindeschicht zwischen der Reibschicht und dem Kernkörper notwendig ist.

Besonders vorteilhaft ist die Verwendung eines derartigen Reibkörpers bzw. derartig hergestellten Reibkörpers in hoch beanspruchten Kraftfahrzeugteilen, insbesondere als Bremsscheibe, als Reibbelag oder als Kupplungsscheibe. Die Verwendung in Verbindung mit einem zweigeteilten, beispielsweise innenbelüfteten Kernkörper lässt sich mit den vorstehenden Verfahren besonders einfach durchführen, ist aber nicht Voraussetzung zur Durchführung der dargestellten Verfahren.

Die Erfindung ist nachstehen anhand des in den Figuren dargestellten Ausführungsbeispiels näher erläutert. Es zeigen:
- Fig. 1: einen Hauptschnitt durch eine erfindungsgemäße Bremsscheibe
- Fig. 2: eine Schrägansicht in einer Explosionsdarstellung und
- Fig. 3: eine Darstellung des Herstellverfahrens.

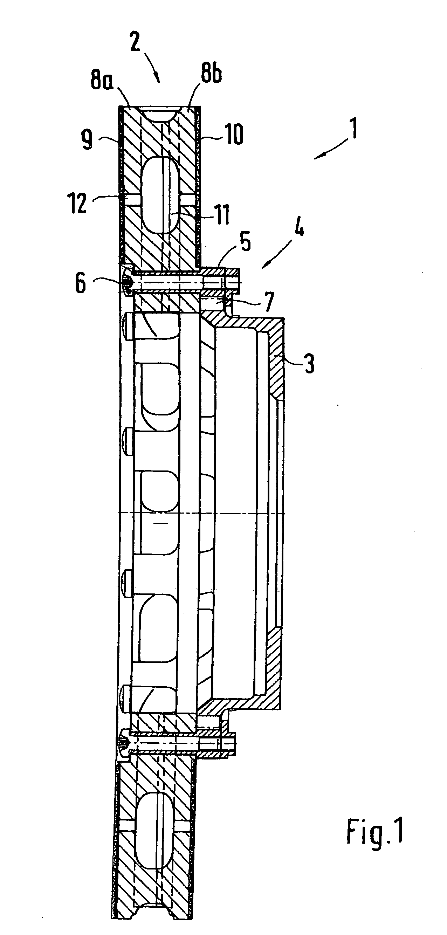

Die in Fig. 1 dargestellte Bremsscheibe 1 besteht aus einem Reibkörper, hier einem Reibring 2 und einem Topf 3. Zur Verbindung des Reibringes 2 mit dem Topf 3 sind Verbindungselemente 4 vorgesehen, die jeweils aus einer Hülse 5 und einer Schraube 6 bestehen. Die Hülsen 5 sind fußseitig in Schlitzen 7 geführt, die außenseits am Topf 3 in radialer Richtung verlaufend vorgesehen sind. Die Hülsen 5 durchdringen den Reibring 2 vollständig, so dass die Schrauben 6 nur noch zur Sicherung des Reibringes 2 in axialer Richtung dienen.

Der Reibring 2 besteht aus einem Kernkörper 8 und außenseits angeordneten Reibschichten 9, 10. Der Kernkörper 8 ist seinerseits aus zwei Hälften 8a und 8b aufgebaut und weist Luftkanäle 11 auf, die zwischen den Hälften 8a und 8b vorgesehen sind. Bohrungen 12 sind im Reibring 2 in axialer Richtung angeordnet und durchdringen den Kernkörper 8 wie auch die Reibschichten 9, 10.

Der Kernkörper 8 besteht aus Kohlestofffaser-verstärktem Siliziumcarbid. Die Länge der Kohlenstofffasern im Kernkörper 8 liegt im Bereich von 5 bis 9 mm. Die Reibschichten 9, 10 sind aus einem gleichartigen Material aufgebaut, wobei die Länger der Kohlenstofffasern im Bereich von 1 bis 5 mm, vorzugsweise bei 1 mm liegt.

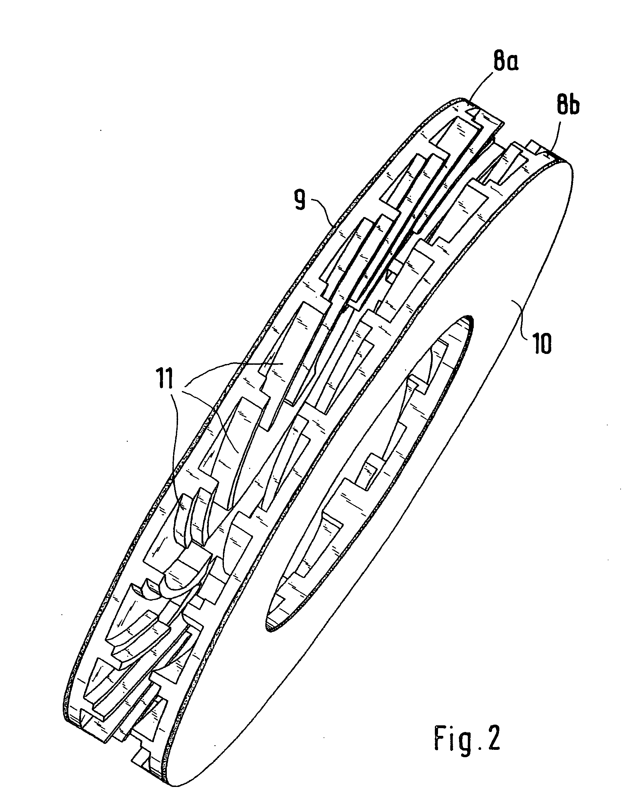

In Fig. 2 sind die Hälften 8a, 8b des Kernkörpers in einer Explosionsdarstellung getrennt dargestellt. Gut erkennbar sind die Luftkanäle 11, die evolventenförmig ausgebildet sind und jeweils halbseitig in die Hälften 8a, 8b des Kernkörpers eingearbeitet sind. Die Bohrungen 12 sind hier nicht dargestellt. Die Reibschichten 9, 10 überdecken beide Stirnflächen des Reibringes 2, jedenfalls aber die mit einem reibenden Gegenkörper wie beispielsweise einem Bremsbelag zusammenwirkenden Flächenbereiche. Die Dicke d der Reibschichten 9, 10 beträgt zwischen 1 und 4 mm.

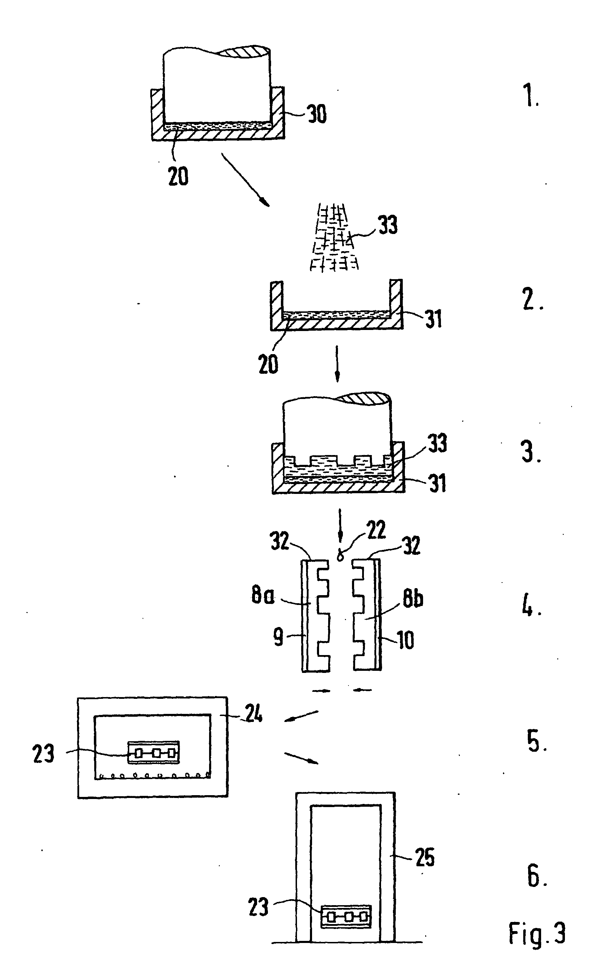

Fig. 3 zeigt die Schritte zum Herstellen des Reibringes 2. In einem ersten Schritt werden in einer ersten Form 30 Grünlinge 20 für die Reibschichten 9, 10 hergestellt. Jeweils einer dieser Grünlinge 20 wird in einem zweiten Schritt in einer Form 31 zum Herstellen von Grünlingen 32 für die Hälften 8a, 8b des Kernkörpers eingelegt. In diese Form 31 wird dann das Material 33 für den Kernkörper 8 eingefüllt und in einem dritten Schritt mit Hilfe eines Formstempels geformt. Auf diese Weise erhält man Grünlinge 32, die bereits einen einstückigen Verbund von jeweils einer der Hälften 8a, 8b des Kernkörpers und einer der Reibschichten 9, 10 darstellen. Die Grünlinge 32 werden in einem vierten Schritt durch Graphit-Kleber 22 miteinander zu einem Grünling 23 für den Reibring 2 verbunden, der schließlich in einem fünften Schritt in an sich bekannter Weise in einem Ofen 24 pyrolisiert und schließlich in einem sechsten Schritt in einem weiteren Ofen 25 mit Silizium infiltriert wird. Der Reibring 2, den man auf diese Weise erhält, wird später noch einer Feinbearbeitung unterzogen.

Auch wenn vorstehend der Kernkörper 8 stets zweigeteilt ausgeführt dargestellt ist, so ist doch darauf hinzuweisen, dass alle vorstehend gezeigten Vorrichtungen und Verfahrensschritte auch mit einem einteiligen Kernkörper 8 verwendbar sind. Die Verfahrensschritte sind entsprechend zu modifizieren.

## Patentansprüche

1. Verfahren zum Herstellen eines Reibkörpers aus siliziuminfiltriertem, kohlenstofffaserverstärktem porösen Kohlenstoff, wobei auf einem Kernkörper (8) wenigstens eine gesonderte Reibschicht (9, 10) mit Kohlenstoff-Kurzfasern vorgesehen ist, mit folgenden Schritten:
- Herstellen von Grünlingen (20) für die Reibschicht (9, 10)
- Einlegen des Grünlings (20) für die Reibschicht (9, 10) in eine Urform (31) für den Kernkörper (8)
- Einfüllen des Materials (33) für den Kernkörper (8) in die Urform (31)
- Herstellen des Grünlings (32) für den Reibkörper
- Pyrolisieren des Grünlinges (32) für den Reibkörper
- Silizium-Infiltrieren des pyrolisierten Grünlinges (32) für den Reibkörper

2. Verfahren nach Anspruch 1, **dadurch gekennzeichnet, dass** die Reibschicht (9, 10) mit Kohlenstofffasern versehen wird, wobei die Länge der Kohlenstofffasern in der Reibschicht (9, 10) geringer als die Länge der Kohlenstofffasern im Kernkörper (8) ist.

3. Verfahren nach Anspruch 2, **dadurch gekennzeichnet, dass** die Länge der Kohlenstofffasern in der Reibschicht (9, 10) weniger als 50 % der Länge der Kohlenstofffasern im Kernkörper (8) beträgt.

4. Verfahren nach Anspruch 3, **dadurch gekennzeichnet, dass** die Länge der Kohlenstofffasern in der Reibschicht (9, 10) im Bereich von 1 bis 5 mm liegt.

5. Verwendung eines Reibkörpers hergestellt nach einem der vorstehenden Ansprüche als Bestandteil eines Reibbelages, einer Bremsscheibe (1) oder einer Kupplungsscheibe in Fahrzeugen.

6. Verwendung nach Anspruch 5, wobei der Kernkörper (8) mehrteilig ausgeführt ist.

## Claims

1. Method for producing a friction body composed of carbon-fibre-reinforced porous carbon which has been infiltrated with silicon, wherein at least one separate friction layer (9, 10) with short carbon fibres is provided on a core body (8), comprising the following steps:
- producing green bodies (20) for the friction layer (9, 10),
- introducing the green body (20) for the friction layer (9, 10) into a primary mould (31) for the core body (8),
- feeding the material (33) for the core body (8) into the primary mould (31),
- producing the green body (32) for the friction body,
- pyrolysing the green body (32) for the friction body, and
- infiltrating the pyrolysed green body (32) for the friction body with silicon.

2. Method according to Claim 1, **characterized in that** the friction layer (9, 10) is provided with carbon fibres, wherein the length of the carbon fibres in the friction layer (9, 10) is shorter than the length of the carbon fibres in the core body (8).

3. Method according to Claim 2, **characterized in that** the length of the carbon fibres in the friction layer (9, 10) is less than 50% of the length of the carbon fibres in the core body (8).

4. Method according to Claim 3, **characterized in that** the length of the carbon fibres in the friction layer (9, 10) is in the range of between 1 and 5 mm.

5. Use of a friction body produced according to one of the preceding claims as a component part of a friction lining, of a brake disc (1) or of a clutch disc in vehicles.

6. Use according to Claim 5, wherein the core body (8) has many parts.

## Revendications

1. Procédé de fabrication d'un corps de friction en carbone poreux infiltré par du silicium et renforcé par des fibres de carbone, dans lequel au moins une couche de friction séparée (9, 10) avec des fibres de carbone courtes est prévue sur un corps de noyau (8), et comprenant les étapes suivantes :
- fabrication d'ébauches (20) pour la couche de friction (9, 10)
- introduction de l'ébauche (20) pour la couche de friction (9, 10) dans un moule primaire (31) pour le corps de noyau (8),
- déversement du matériau (33) pour le corps de noyau (8) dans le moule primaire (31)
- fabrication de l'ébauche (32) pour le corps de friction,
- pyrolyse de l'ébauche (32) pour le corps de friction,
- infiltration de silicium dans l'ébauche pyrolysée (32) pour le corps de friction.

2. Procédé selon la revendication 1, **caractérisé en ce que** la couche de friction (9, 10) est pourvue de fibres de carbone, la longueur des fibres de carbone dans la couche de friction (9, 10) étant inférieure à la longueur des fibres de carbone dans le corps de noyau (8).

3. Procédé selon la revendication 2, **caractérisé en ce que** la longueur des fibres de carbone dans la couche de friction (9, 10) est inférieure à 50 % de la longueur des fibres de carbone dans le corps de noyau (8).

4. procédé selon la revendication 3, **caractérisé en ce que** la longueur des fibres de carbone dans la couche de friction (9, 10) est de l'ordre de 1 à 5 mm.

5. Utilisation d'un corps de friction fabriqué selon l'une quelconque des revendications précédentes, en tant que constituant d'une garniture de friction, d'un disque de frein (1) ou d'un disque d'embrayage dans des véhicules.

6. Utilisation selon la revendication 5, dans laquelle le corps de noyau (8) est réalisé en plusieurs parties.
